(19) Europäisches Patentamt / European Patent Office / Office européen des brevets

(11) EP 4 163 329 A1

(12) EUROPEAN PATENT APPLICATION
published in accordance with Art. 153(4) EPC

(43) Date of publication:
**12.04.2023 Bulletin 2023/15**

(21) Application number: **21818181.6**

(22) Date of filing: **02.06.2021**

(51) International Patent Classification (IPC):
***C08K 5/42*** (2006.01) ***C08L 67/02*** (2006.01)
***C08L 73/00*** (2006.01) ***C08L 77/06*** (2006.01)
***C08L 81/00*** (2006.01) ***C08L 101/02*** (2006.01)
***C08L 101/06*** (2006.01) ***C08L 79/08*** (2006.01)

(52) Cooperative Patent Classification (CPC):
**C08K 5/42; C08L 67/02; C08L 73/00; C08L 77/06; C08L 79/08; C08L 81/00; C08L 101/02; C08L 101/06**

(86) International application number:
**PCT/JP2021/020942**

(87) International publication number:
**WO 2021/246432 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.06.2020 JP 2020096747**

(71) Applicant: **Kao Corporation**
**Chuo-ku**
**Tokyo 103-8210 (JP)**

(72) Inventors:
- **ONOUE, Akihiro**
**Wakayama-shi, Wakayama 640-8580 (JP)**
- **YOSHIMURA,Tadanori**
**Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

Remarks:
A request for correction of claims and description has been filed pursuant to Rule 139 EPC. A decision on the request will be taken during the proceedings before the examining division (Guidelines for Examination in the EPO, A-V, 3).

# (54) WATER-DISPERSIBLE RESIN COMPOSITION

(57) The present invention is a water-dispersible resin composition containing: a resin α that includes, in the main chain thereof, a structure M having two aromatic rings linked by a sulfide group, a sulfonyl group, an imide group, or a keto group; and a resin β having a hydrophilic group, the resins α and β being configured to form a co-continuous structure including three-dimensional continuous phases of the resins α and β. The present invention can provide a water-dispersible resin composition that maintains the heat resistance of the polymer material and can be removed only with water.

EP 4 163 329 A1

Fig.1

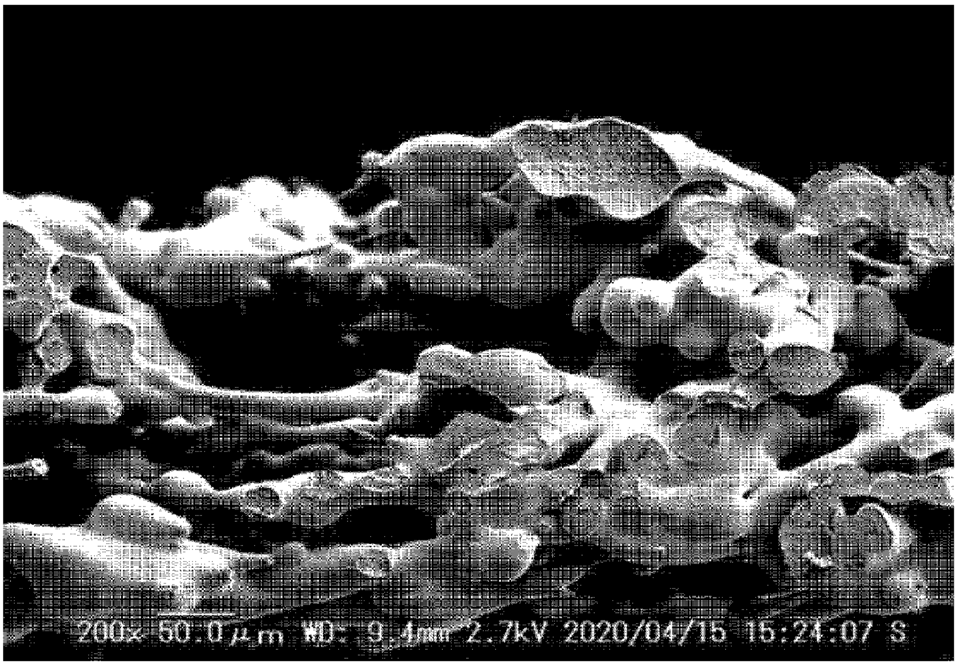

## Description

### TECHNICAL FIELD

The present invention relates to a water-dispersible resin composition.

### BACKGROUND ART

It has been difficult to achieve both the water solubility and the heat resistance of water-soluble polymers. In order to increase the heat resistance of polymer materials, the polymer materials are designed to suppress the affinity with water to reduce an influence of water. Therefore, for removal of such polymer materials, removal methods with a solvent other than water or by addition of a component other than water to water have been proposed (for example, JP-A-2018-24243 and JP-A-2017-114930) .

### SUMMARY OF THE INVENTION

The present invention is a water-dispersible resin composition containing: a resin α that includes, in the main chain thereof, a structure M having two aromatic rings linked by a sulfide group, a sulfonyl group, an imide group, or a keto group; and a resin β having a hydrophilic group, the resins α and β being configured to form a co-continuous structure including three-dimensional continuous phases of the resins α and β.

### BRIEF DESCRIPTION OF THE DRAWINGS

Fig. 1 is an SEM photograph showing morphology of a resin composition according to an example.

### MODE FOR CARRYING OUT THE INVENTION

Engineering plastics such as a polyamide resin and an acrylonitrile-butadiene-styrene copolymer resin and super engineering plastics such as a polysulfone resin and a polyamide-imide resin have excellent heat resistance and chemical resistance. Therefore, it is difficult to remove these plastics by the removal methods with a solvent other than water or by addition of a component other than water to water.
It has been considered that water-soluble resins can widely be developed to the field that requires high heat resistance when being materials that maintain physical properties such as heat resistance and can easily be removed with water.
The present invention provides a water-dispersible resin composition that maintains the heat resistance and can easily be removed only with water.
The inventors of the present invention have earnestly studied to achieve the above object and found that the above obj ect can be achieved by combining a high heat resistance resin having a specific structure with an aqueous solution resin having a specific structure. The present invention has thus been completed.
The present invention is a water-dispersible resin composition containing: a resin α that includes, in the main chain thereof, a structure M having two aromatic rings linked by a sulfide group, a sulfonyl group, an imide group, or a keto group; and a resin β having a hydrophilic group, the resins α and β being configured to form a co-continuous structure including three-dimensional continuous phases of the resins α and β.
The present invention can provide a water-dispersible resin composition that maintains the heat resistance and can be removed only with water.
Hereinafter, one embodiment of the present invention is described.

<Water-dispersible resin composition>

A water-dispersible resin composition according to the present embodiment contains: a resin α that includes, in the main chain thereof, a structure M having two aromatic rings linked by a sulfide group, a sulfonyl group, an imide group, or a keto group; and a resin β having a hydrophilic group, the resins α and β being configured to form a co-continuous structure including three-dimensional continuous phases of the resins α and β. The water-dispersible resin composition according to the present embodiment can provide a water-dispersible resin composition that maintains the heat resistance and can be removed only with water. Reasons why the water-dispersible resin composition according to the present embodiment can achieve both the heat resistance and the water dispersibility are considered as follows.
The aromatic rings in the resin α are effective to mainly impart the heat resistance. Further, the sulfide group, the sulfonyl group, the imide group, and the keto group for linking the aromatic rings in the resin α are highly polar and

easily cause molecular interaction with the hydrophilic group in the resin β. This can increase electrostatic interaction with the hydrophilic group in the resin β. It is considered that with the increase of the interaction between the resins α and β, the resins α and β form, in the water-dispersible resin composition, a co-continuous structure including three-dimensional continuous phases of the resins α and β, and both the functions, i.e., the heat resistance and the water dispersibility, can thereby be achieved without being separated from each other.

[Resin α]

The resin α includes, in the main chain thereof, a structure M having two aromatic rings linked by a sulfide group, a sulfonyl group, an imide group, or a keto group. From the viewpoint of securing the water dispersibility of the water-dispersible resin composition, the structure M is a structure having two aromatic rings linked preferably by an imide group. From the viewpoint of securing the heat resistance of the water-dispersible resin composition, the structure M is a structure having two aromatic rings linked preferably by a sulfonyl group.

From the viewpoint of achieving both the heat resistance and the water dispersibility of the water-dispersible resin composition, the structure M is preferably represented by a General Formula (1) or (2) below.

[Formula 1]

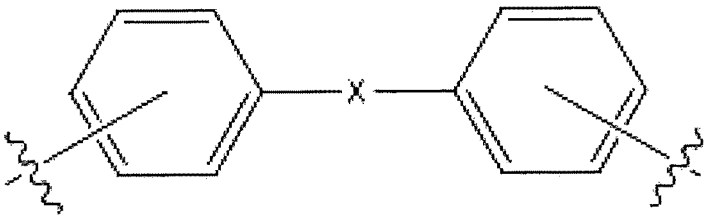

(1)

(In the General Formula (1), X represents $SO_2$, S, or CO.)

[Formula 2]

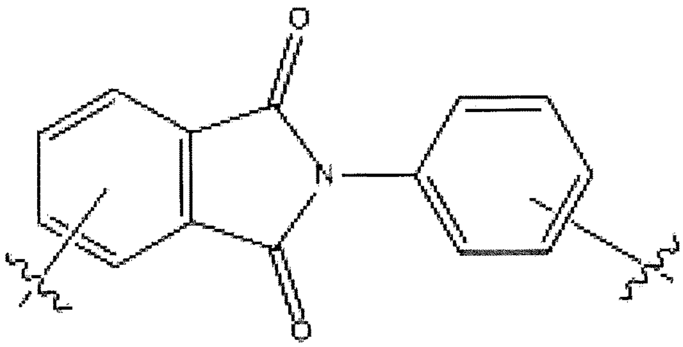

(2)

From the viewpoint of achieving both the heat resistance and the water dispersibility of the water-dispersible resin composition, the resin α may include at least one structure M.

From the viewpoint of achieving both the heat resistance and the water dispersibility of the water-dispersible resin composition, the content of the structure M in the resin α is preferably 1 mmol/g or more, more preferably 2 mmol/g or more, and still more preferably 3 mmol/g or more. From the same viewpoint, the content is preferably 10 mmol/g or less, more preferably 6 mmol/g or less, and still more preferably 5 mmol/g or less. From the viewpoint of achieving both the heat resistance and the water dispersibility of the water-dispersible resin composition, the content of the structure M in the resin α is preferably 1 to 10 mmol/g, more preferably 2 to 6 mmol/g, and still more preferably 3 to 5 mmol/g.

From the viewpoint of achieving both the heat resistance and the water dispersibility of the water-dispersible resin composition, it is preferred that the resin α further includes, in the main chain thereof, a structure L that is different from the structure M and has two linked aromatic rings.

From the viewpoint of achieving both the heat resistance and the water dispersibility of the water-dispersible resin composition, the structure L is a structure having two aromatic rings linked preferably by a single bond, an ether group, or an alkyl methylene group, more preferably by a single bond or an ether group, and still more preferably by an

ether group.

From the viewpoint of achieving both the heat resistance and the water dispersibility of the water-dispersible resin composition, the resin α may include at least one structure L.

From the viewpoint of securing the heat resistance of the water-dispersible resin composition, the resin α has a glass transition temperature of preferably 150°C or more, more preferably 200°C or more, and still more preferably 210°C or more. From the viewpoint of securing the moldability of the water-dispersible resin composition, the resin α has a glass transition temperature of preferably 280°C or less, more preferably 250°C or less, and still more preferably 230°C or less. From the viewpoint of securing the heat resistance and the moldability of the water-dispersible resin composition, the resin α has a glass transition temperature of preferably 150 to 280°C, more preferably 200 to 250°C, and still more preferably 210 to 230°C.

From the viewpoint of achieving both the heat resistance and the water dispersibility of the water-dispersible resin composition, the resin α is preferably at least one selected from the group consisting of polyphenylsulfone, polysulfone, polyetherimide, polyether ether ketone, polyphenylenesulfide, polyethersulfone, and polyamide-imide, and more preferably at least one selected from the group consisting of polyphenylsulfone, polysulfone, polyetherimide, and polyethersulfone. From the viewpoint of securing the heat resistance of the water-dispersible resin composition, the resin α is still more preferably polyethersulfone. From the viewpoint of securing the water dispersibility of the water-dispersible resin composition, the resin α is still more preferably polyetherimide.

From the viewpoint the heat resistance of the water-dispersible resin composition, the content of the resin α in the water-dispersible resin composition is preferably 10 mass% or more, more preferably 15 mass% or more, and still more preferably 20 mass% or more. From the viewpoint of the water dispersibility of the water-dispersible resin composition, the content is preferably 80 mass% or less, more preferably 75 mass% or less, still more preferably 70 mass% or less, and still more preferably 65 mass% or less. From the viewpoint of achieving both the heat resistance and the water dispersibility of the water-dispersible resin composition, the content of the resin α in the water-dispersible resin composition is preferably 10 to 80 mass%, more preferably 15 to 75 mass%, still more preferably 20 to 70 mass%, and still more preferably 20 to 65 mass%.

The method for producing the resin α is not particularly limited, and a conventionally known method can be applied.

[Resin β]

The resin β has a hydrophilic group (in the present description, also simply referred to as a hydrophilic group) other than a hydrophilic group that constitutes the polymerization involving the generation of the resin β. From the viewpoint of achieving both the heat resistance and the water dispersibility of the water-dispersible resin composition, the resin β preferably includes: an aromatic dicarboxylic acid monomer unit A having a hydrophilic group; and a dicarboxylic acid monomer unit B having no hydrophilic group.

[Aromatic dicarboxylic acid monomer unit A]

In the present description, the aromatic dicarboxylic acid monomer unit included in the resin β and having a hydrophilic group is referred to as an aromatic dicarboxylic acid monomer unit A. The aromatic dicarboxylic acid for deriving the aromatic dicarboxylic acid monomer unit A is referred to as an aromatic dicarboxylic acid A.

From the viewpoint of achieving both the heat resistance and the water dispersibility of the water-dispersible resin composition, the hydrophilic group is, for example, at least one selected from the group consisting of anionic groups, cationic groups, and nonionic_groups. Among these groups, the hydrophilic group is, from the same viewpoint, preferably at least one selected from the group consisting of anionic groups, and more preferably a sulfonate group.

From the viewpoint of achieving both the heat resistance and the water dispersibility of the water-dispersible resin composition, the sulfonate group is preferably a sulfonate group represented by $-SO_3M$ (M represents a counterion of a sulfonic acid group that constitutes the sulfonate group, and from the viewpoint of achieving both the heat resistance and the water dispersibility of the water-dispersible resin composition, M is preferably at least one selected from the group consisting of metal ions and an ammonium ion, more preferably at least one selected from the group consisting of metal ions, still more preferably at least one selected from the group consisting of alkali metal ions and alkaline earth metal ions, still more preferably at least one selected from the group consisting of alkali metal ions, still more preferably one or two selected from the group consisting of a sodium ion and a potassium ion, and still more preferably a sodium ion).

From the viewpoint of the water dispersibility of the water-dispersible resin composition, the content of the hydrophilic group in the resin β is preferably 0.5 mmol/g or more, more preferably 0.6 mmol/g or more, and still more preferably 0.7 mmol/g or more. From the viewpoint of the heat resistance of the water-dispersible resin composition, the content is preferably 3 mmol/g or less, more preferably 2 mmol/g or less, and still more preferably 1.5 mmol/g or less.

From the viewpoint of improving the heat resistance of the water-dispersible resin composition, the resin β has

a glass transition temperature of preferably 30°C or more, more preferably 70°C or more, still more preferably 90°C or more, and still more preferably 100°C or more. From the viewpoint of securing the moldability of the water-dispersible resin composition, the resin β has a glass transition temperature of preferably 280°C or less, more preferably 200°C or less, and still more preferably 170°C or less.

From the viewpoint of achieving both the heat resistance and the water dispersibility of the water-dispersible resin composition, the aromatic dicarboxylic acid A is preferably at least one selected from the group consisting of aromatic dicarboxylic acids having the hydrophilic group, more preferably at least one selected from the group consisting of anionic group-containing aromatic dicarboxylic acids, cationic group-containing aromatic dicarboxylic acids, and nonionic group-containing aromatic dicarboxylic acids, and still more preferably at least one selected from the group consisting of sulfonate group-containing aromatic dicarboxylic acids. Among these acids, the aromatic dicarboxylic acid A is, from the same viewpoint, preferably at least one selected from the group consisting of sulfophthalic acids and sulfonaphthalenedicarboxylic acids, more preferably at least one selected from the group consisting of sulfophthalic acids, still more preferably at least one selected from the group consisting of sulfoisophthalic acids and sulfoterephthalic acids, and still more preferably 5-sulfoisophthalic acid.

From the view point of the water dispersibility of the water-dispersible resin composition, the proportion of the aromatic dicarboxylic acid monomer unit A to the total of all the monomer units in the resin β is preferably 5 mol% or more, more preferably 7 mol% or more, and still more preferably 10 mol% or more. From the viewpoint of the heat resistance of the water-dispersible resin composition, the proportion is preferably 30 mol% or less, more preferably 25 mol% or less, and still more preferably 20 mol% or less.

From the view point of the water dispersibility of the water-dispersible resin composition, the proportion of the aromatic dicarboxylic acid monomer unit A to the total of all the dicarboxylic acid monomer units in the resin β is preferably 10 mol% or more, more preferably 15 mol% or more, and still more preferably 20 mol% or more. From the viewpoint of the heat resistance of the water-dispersible resin composition, the proportion is preferably 50 mol% or less, more preferably 40 mol% or less, and still more preferably 35 mol% or less.

[Dicarboxylic acid monomer unit B]

The resin β includes a dicarboxylic acid monomer unit not having the hydrophilic group. In the present description, the dicarboxylic acid monomer unit included in the resin β and having no hydrophilic group is referred to as a dicarboxylic acid monomer unit B. The dicarboxylic acid for deriving the dicarboxylic acid monomer unit B is referred to as a dicarboxylic acid B.

From the viewpoint of the heat resistance of the water-dispersible resin composition, the dicarboxylic acid B is more preferably at least one selected from the group consisting of aromatic dicarboxylic acids not having the hydrophilic group and aliphatic dicarboxylic acids not having the hydrophilic group. Among these acids, the dicarboxylic acid B is, from the same viewpoint, still more preferably at least one selected from the group consisting of phthalic acids, furandicarboxylic acids, naphthalenedicarboxylic acids, cyclohexanedicarboxylic acids, and adamantanedicarboxylic acids, still more preferably at least one selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantanedicarboxylic acid, and still more preferably at least one selected from the group consisting of terephthalic acid and 2,6-naphthalenedicarboxylic acid.

From the view point of the heat resistance of the water-dispersible resin composition, the proportion of the amount of substance of the dicarboxylic acid monomer unit B to the total amount of substance of all the monomer units in the resin β is preferably 15 mol% or more, more preferably 25 mol% or more, and still more preferably 30 mol% or more. From the viewpoint of the water dispersibility of the water-dispersible resin composition, the proportion is preferably 45 mol% or less, more preferably 42 mol% or less, and still more preferably 40 mol% or less.

From the view point of the heat resistance of the water-dispersible resin composition, the proportion of the dicarboxylic acid monomer unit B to the total of all the dicarboxylic acid monomer units in the resin β is preferably 30 mol% or more, more preferably 50 mol% or more, and still more preferably 70 mol% or more. From the viewpoint of the water dispersibility of the water-dispersible resin composition, the proportion is preferably 90 mol% or less, more preferably 85 mol% or less, and still more preferably 80 mol% or less.

From the viewpoint of the heat resistance of the water-dispersible resin composition, the molar ratio of the aromatic dicarboxylic acid monomer unit A to the dicarboxylic acid monomer unit B (the aromatic dicarboxylic acid monomer unit A/the dicarboxylic acid monomer unit B) in the resin β is preferably 10/90 or more, more preferably 15/85 or more, and still more preferably 20/80 or more. From the viewpoint of the water dispersibility of the water-dispersible resin composition, the molar ratio is preferably 60/40 or less, more preferably 40/60 or less, and still more preferably 30/70 or less.

[Monomer unit C]

The resin β preferably includes a monomer unit derived from a monomer having two functional groups reactive with a carboxy group. In the present description, the monomer having two functional groups reactive with a carboxy group is referred to as a monomer C, and the monomer unit derived from the monomer C is referred to as a monomer unit C.
Examples of the monomer unit C include a monomer unit derived from at least one selected from the group consisting of diols, diamines, and alkanolamines. The monomer unit C is preferably an aliphatic diol monomer unit derived from an aliphatic diol, an aromatic diol monomer unit derived from an aromatic diol, an aliphatic diamine monomer unit derived from an aliphatic diamine, or the like. Among these monomer units, the monomer unit C is preferably the aliphatic diol monomer unit.
From the viewpoints of imparting the dispersibility in water to the resin composition and maintaining the heat resistance of the resin composition, the aliphatic diol preferably has 2 or more carbon atoms. From the same viewpoints, the aliphatic diol has preferably 31 or less carbon atoms, more preferably 25 or less carbon atoms, still more preferably 20 or less carbon atoms, and still more preferably 15 or less carbon atoms.
The aliphatic diol is, for example, at least one selected from the group consisting of chain diols and cyclic diols. From the viewpoints of imparting the dispersibility in water to the resin composition and maintaining the heat resistance of the resin composition, the aliphatic diol is preferably a chain diol.
From the viewpoints of imparting the dispersibility in water to the resin composition and maintaining the heat resistance of the resin composition, the chain diol preferably has 2 or more carbon atoms. From the same viewpoints, the chain diol has preferably 6 or less carbon atoms, more preferably 4 or less carbon atoms, still more preferably 3 or less carbon atoms, and still more preferably 2 carbon atoms.
The aliphatic diol may have an ether oxygen atom. From the viewpoints of imparting the dispersibility in water to the resin composition and maintaining the heat resistance of the resin composition, the number of ether oxygen atoms is preferably 1 or less when the aliphatic diol is a chain diol. From the same viewpoints, the number of ether oxygen atoms is preferably 2 or less when the aliphatic diol C is a cyclic diol.
From the viewpoints of imparting the dispersibility in water to the resin composition and maintaining the heat resistance of the resin composition, the chain diol is preferably at least one selected from the group consisting of ethylene glycol, 1,2-propanediol, 1,3-propanediol, diethylene glycol, and dipropylene glycol, more preferably at least one selected from the group consisting of ethylene glycol, 1,2-propanediol, and 1,3-propanediol, and still more preferably ethylene glycol.
From the viewpoints of imparting the dispersibility in water to the resin composition and maintaining the heat resistance of the resin composition, the aliphatic diamine for deriving the aliphatic diamine monomer unit is preferably a chain diamine.
From the viewpoints of imparting the dispersibility in water to the resin composition and maintaining the heat resistance of the resin composition, the chain diamine has preferably 2 or more carbon atoms, more preferably 3 or more carbon atoms, and still more preferably 4 or more carbon atoms. From the same viewpoints, the chain diamine has preferably 12 or less carbon atoms, more preferably 10 or less carbon atoms, and still more preferably 8 or less carbon atoms.
From the viewpoints of imparting the dispersibility in water to the resin composition and maintaining the heat resistance of the resin composition, the chain diamine is preferably at least one selected from the group consisting of alkyldiamines, and still more preferably

hexamethylenediamine.

[Other monomer units]

The resin β may have a monomer unit other than the aromatic dicarboxylic acid monomer unit A, the dicarboxylic acid monomer unit B, and the monomer unit C as long as the effects of the present embodiment are not impaired.
The resin β is preferably a polyester, a polyamide, or a polyesteramide, and more preferably a polyester or a polyamide. Examples of the resin β include a resin including a unit represented by a General Formula (3) below and a unit represented by a General Formula (4) below.

[Formula 3]

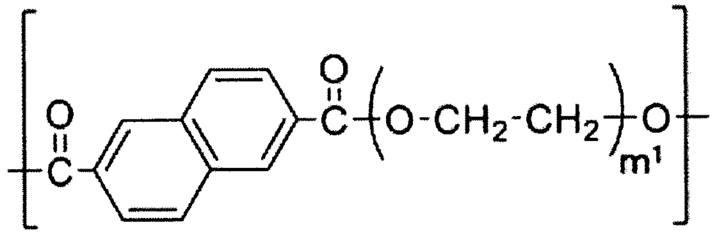

(3)

[Formula 4]

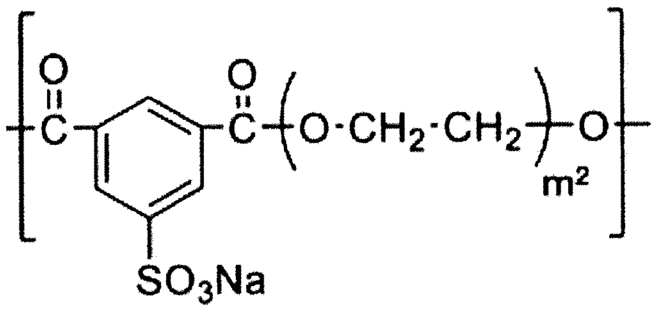

(4)

In the General Formulae (3) and (4), $m^1$ and $m^2$ represent the average number of moles of ethylene glycol monomer units added and are each 1 to 3, preferably 1. The units of the General Formulae (3) and (4) are bonded in a block bond or a random bond, preferably in a random bond.

From the viewpoint of maintaining the heat resistance of the water-dispersible resin composition, the resin β has a weight average molecular weight of preferably 5000 or more, more preferably 10000 or more, and still more preferably 13000 or more. From the viewpoint of the water dispersibility of the water-dispersible resin composition, the resin β has a weight average molecular weight of preferably 50000 or less, more preferably 40000 or less, still more preferably 30000 or less, and still more preferably 20000 or less. In the present description, the weight average molecular weight is measured by the method described in EXAMPLES.

From the viewpoint of the water dispersibility of the water-dispersible resin composition, the content of the resin β in the water-dispersible resin composition is preferably 25 mass% or more, more preferably 35 mass% or more, and still more preferably 40 mass% or more. From the viewpoint of the heat resistance of the water-dispersible resin composition, the content is preferably 90 mass% or less, more preferably 80 mass% or less, and still more preferably 70 mass% or less.

The method for producing the resin β is not particularly limited, and a conventionally known method can be applied.

From the viewpoint of the water dispersibility of the water-dispersible resin composition, the mass ratio of the content of the resin β to the content of the resin α (the content of the resin β/the content of the resin α) contained in the water-dispersible resin composition is preferably 25/75 or more, more preferably 35/65 or more, and still more preferably 40/60 or more. From the viewpoint of the heat resistance of the water-dispersible resin composition, the mass ratio is preferably 90/10 or less, more preferably 80/20 or less, and still more preferably 75/25 or less. From the viewpoint of achieving both the heat resistance and the water dispersibility of the water-dispersible resin composition, the mass ratio of the content of the resin β to the content of the resin α contained in the water-dispersible resin composition is preferably 25/75 to 90/10, more preferably 35/65 to 80/20, and still more preferably 40/60 to 75/25.

From the viewpoint of achieving both the heat resistance and the water dispersibility of the water-dispersible resin composition, the molar ratio of the content of the hydrophilic group in the resin β to the content of the structure M in the resin α (the content of the structure M/the content of the hydrophilic group) contained in the water-dispersible resin composition is preferably 40/60 or more, more preferably 45/55 or more, and still more preferably 50/50 or more. From the viewpoint of the water dispersibility of the water-dispersible resin composition, the molar ratio is preferably 99/1 or less, more preferably 90/10 or less, and still more preferably 85/15 or less. From the viewpoint of achieving both the heat resistance and the water dispersibility of the water-dispersible resin composition, the molar ratio of the content of the hydrophilic group in the resin β to the content of the structure M in the resin α (the content of the structure M/the

content of the hydrophilic group) contained in the water-dispersible resin composition is preferably 40/60 to 99/1, more preferably 45/55 to 90/10, and still more preferably 50/50 to 85/15.

The water-dispersible resin composition may contain another component as long as the effects of the present embodiment are not impaired. Examples of the other component include: polymers other than the resins $\alpha$ and $\beta$; plasticizers such as benzoic acid polyalkylene glycol diester; fillers such as calcium carbonate, magnesium carbonate, a glass beads, graphite, carbon black, a carbon fiber, a glass fiber, talc, wollastonite, mica, alumina, silica, kaolin, whisker, and silicon carbide; compatibilizers; and elastomers. Examples of the polymers other than the resins $\alpha$ and $\beta$ include a water-insoluble resin $\gamma$ below. Examples of the compatibilizers include an organic salt compound $\delta$ below.

[Water-insoluble resin $\gamma$]

From the viewpoint of achieving both the heat resistance and the water dispersibility of the water-dispersible resin composition, the water-dispersible resin composition may contain a water-insoluble resin $\gamma$ having an epoxy group, a carbodiimide group, or an acid anhydride group. From the same viewpoint, the water-insoluble resin $\gamma$ preferably has an epoxy group from the same viewpoint.

Examples of the water-insoluble resin $\gamma$ having an epoxy group include Bondfast (registered trademark) 7B, Bondfast 2E, Bondfast 2C, Bondfast 7M, and Bondfast CG5001 (all manufactured by Sumitomo Chemical Co., Ltd.) ; Lotader (registered trademark) AX8840 (manufactured by Arkema S.A.); JONCRYL (registered trademark) ADR4370S, JONCRYL ADR4368CS, JONCRYL ADR4368F, JONCRYL ADR4300S, and JONCRYL ADR4468 (all manufactured by BASF SE); and ARUFON (registered trademark) UG4035, ARUFON UG4040, and ARUFON UG4070 (all manufactured by Toagosei Co., Ltd.). Examples of the water-insoluble resin $\gamma$ having a carbodiimide group include CARBODILITE (registered trademark) LA-1 (manufactured by Nisshinbo Chemical Inc.) and StabaXol (registered trademark) P (manufactured by Rhein Chemie). Examples of the water-insoluble resin $\gamma$ having an acid anhydride group include UMEX (registered trademark) 1010 (manufactured by SANYO CHEMICAL INDUSTRIES, LTD.); ADMER (registered trademark) (manufactured by Mitsui Chemicals, Inc.); MODIPER (registered trademark) A8200 (manufactured by NOF CORPORATION); OREVAC (registered trademark) (manufactured by Arkema S.A.); FG1901 and FG1924 (all manufactured by KRATON CORPORATION); and Tuftec (registered trademark) M1911, Tuftec M1913, and Tuftec M1943 (all manufactured by Asahi Kasei Chemicals Corp.).

From the viewpoint the water dispersibility of the water-dispersible resin composition, the content of the water-insoluble resin $\gamma$ in the water-dispersible resin composition is preferably 1 mass% or more, more preferably 3 mass% or more, and still more preferably 5 mass% or more. From the viewpoint of maintaining the heat resistance of the water-dispersible resin composition, the content is preferably 40 mass% or less, more preferably 30 mass% or less, and still more preferably 20 mass% or less.

From the viewpoint of achieving both the heat resistance and the water dispersibility of the water-dispersible resin composition, the mass ratio of the resin $\beta$ to the water-insoluble resin $\gamma$ (the mass of the resin $\beta$/the mass of the water-insoluble resin $\gamma$) in the water-dispersible resin composition is preferably 50/50 or more, more preferably 60/40 or more, and still more preferably 70/30 or more. From the same viewpoint, the mass ratio is preferably 95/5 or less, more preferably 93/7 or less, and still more preferably 90/10 or less.

[Organic salt compound $\delta$]

From the viewpoint of the compatibilization between the resins $\alpha$ and $\beta$, the water-dispersible resin composition may contain an organic salt compound represented by a General Formula (5) below. In the present description, the organic salt compound represented by the General Formula (5) below is referred to as an organic salt compound $\delta$.

$$(R\text{-}SO_3^-)_nQ^{n+} \qquad (5)$$

(In the General Formula (5), R represents a hydrocarbon group that may have a substituent and has 1 to 30 carbon atoms, n represents a number of 1 or 2, $Q^{n+}$ represents a monovalent cation, preferably an alkali metal ion, an ammonium ion, or a phosphonium ion when n is 1, and $Q^{n+}$ represents a divalent cation, preferably an alkaline earth metal ion or a transition metal ion when n is 2.)

From the viewpoints of controlling the molecular weight during the production of the water-dispersible resin composition and securing the solubility in neutral water and the moisture absorption resistance, in the General Formula (5), R represents a hydrocarbon group that may have a substituent and has 1 to 30 carbon atoms. The hydrocarbon group can be any of an aliphatic hydrocarbon group, an alicyclic hydrocarbon group, and an aromatic hydrocarbon group. From the viewpoints of controlling the molecular weight during the production of the water-dispersible resin composition and securing the solubility in neutral water and the moisture absorption resistance, the hydrocarbon group has preferably 6 or more carbon atoms, more preferably 10 or more carbon atoms, and still more preferably 12 or more carbon atoms,

and has preferably 30 or less carbon atoms, more preferably 25 or less carbon atoms, and still more preferably 20 or less carbon atoms. From the viewpoints of controlling the molecular weight during the production of the water-dispersible resin composition and securing the solubility in neutral water and the moisture absorption resistance, the aromatic hydrocarbon group is preferably a phenyl group having at least one substituent, more preferably a phenyl group having a branched or linear alkyl group or alkenyl, and still more preferably a phenyl group having a branched or linear alkyl group.

From the viewpoints of controlling the molecular weight during the production of the water-dispersible resin composition and securing the solubility in neutral water and the moisture absorption resistance, in the General formula (5), $Q^{n+}$ is preferably a monovalent cation, more preferably an alkali metal ion, an ammonium ion, or a phosphonium ion, more preferably a lithium ion or a phosphonium ion, and still more preferably a phosphonium ion. From the viewpoint of securing the heat resistance required during the production of the water-dispersible resin composition, $Q^{n+}$ is, among phosphonium ions, preferably a tetraalkylphosphonium ion and more preferably a tetrabutylphosphonium ion.

From the viewpoint of controlling the molecular weight during the production of the water-dispersible resin composition, the viewpoint of the solubility in neutral water, and the viewpoint of securing the moisture absorption resistance, in the General Formula (5), n is preferably 1.

From the viewpoint of the compatibilization between the resins $\alpha$ and $\beta$, the content of the organic salt compound $\delta$ in the water-dispersible resin composition is preferably 0.1 mass% or more, more preferably 1 mass% or more, and still more preferably 2 mass% or more. From the viewpoint of maintaining the heat resistance of the water-dispersible resin composition, the content is preferably 15 mass% or less, more preferably 10 mass% or less, and still more preferably 5 mass% or less.

From the viewpoint of the compatibilization between the resin $\alpha$ and the water-insoluble resin $\beta$, the ratio of the amount of substance (mol) of an alkyl sulfonic acid ion ($R\text{-}SO_3^-$) in the organic salt compound $\delta$ to the total amount of substance (mol) of the hydrophilic group and the sulfonate group included in the resin $\beta$ (the amount of substance of an alkyl sulfonic acid ion in the organic salt compound/the total amount of substance of the hydrophilic group and the sulfonate group in the water-soluble resin) is preferably 0.005 or more, more preferably 0.01 or more, and still more preferably 0.02 or more. From the viewpoint of maintaining the heat resistance of the water-dispersible resin composition and suppressing the bleeding out of the organic salt compound, the ratio is preferably 0.35 or less, more preferably 0.25 or less, and still more preferably 0.2 or less.

From the viewpoint of securing the heat resistance during the use, the water-dispersible resin composition has a glass transition temperature of preferably 150°C or more, more preferably 170°C or more, and still more preferably 180°C or more. From the viewpoint of securing the moldability, the water-dispersible resin composition has a glass transition temperature of preferably 280°C or less, more preferably 250°C or less, and still more preferably 235°C or less. In the present description, the glass transition temperature is measured by the method described in EXAMPLES.

The method for producing the water-dispersible resin composition is not particularly limited, and the water-dispersible resin composition can be produced by a known method. Examples of the method for producing the water-dispersible resin composition include a production method including kneading raw materials with a kneader such as a batch-type kneader or a twin-screw extruder.

The water-dispersible resin composition can be used as a material of a support material in a method for producing a three-dimensional object by fused deposition modeling, the method including: a step of obtaining a three-dimensional object precursor including a three-dimensional object and a support material; and a support material removing step of removing the support material by bringing the three-dimensional object precursor into contact with neutral water. The water-dispersible resin composition can also be used as a material of a water-soluble printing layer and a printing primer layer. The water-dispersible resin composition can also be used as a material of a water-soluble coating layer. The water-dispersible resin composition can also be used as a material of a water-soluble adhesive and a water-soluble gluing agent.

Regarding the embodiment described above, the present invention further discloses the following composition and the like.

<1> A water-dispersible resin composition containing:

a resin $\alpha$ that includes, in a main chain thereof, at least one structure M having two aromatic rings linked by a sulfide group, a sulfonyl group, an imide group, or a keto group; and
a resin $\beta$ having a hydrophilic group,
the resins $\alpha$ and $\beta$ being configured to form a co-continuous structure including three-dimensional continuous phases of the resins $\alpha$ and $\beta$.

<2> The water-dispersible resin composition according to <1>, wherein the structure M is preferably a structure having two aromatic rings linked by an imide group, and preferably a structure having two aromatic rings linked by a sulfonyl group.

<3> The water-dispersible resin composition according to <1> or <2>, wherein the structure M is represented by a General Formula (1) or (2) below.

[Formula 5]

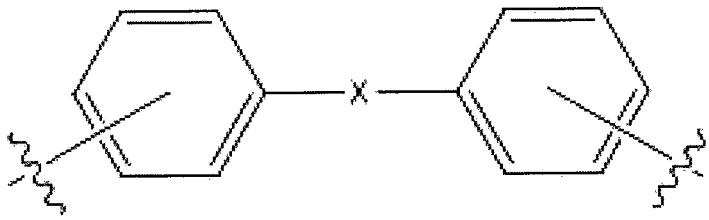

(1)

(In the General Formula (1), X represents $SO_2$, S, or CO.)

[Formula 6]

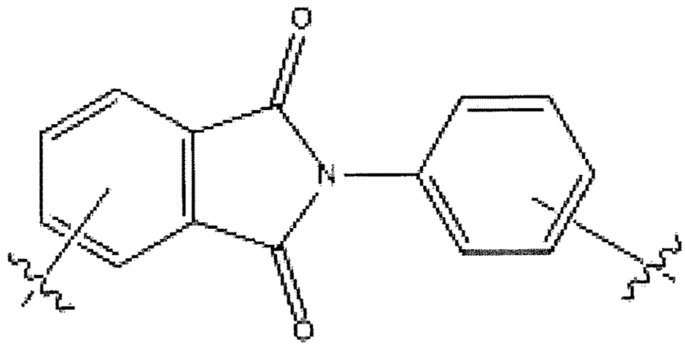

(2)

<4> The water-dispersible resin composition according to any one of <1> to <3>, wherein the resin α includes the at least one structure M.
<5> The water-dispersible resin composition according to any one of <1> to <4>, wherein a content of the structure M in the resin α is preferably 1 mmol/g or more, more preferably 2 mmol/g or more, and still more preferably 3 mmol/g or more.
<6> The water-dispersible resin composition according to any one of <1> to <5>, wherein the content of the structure M in the resin α is preferably 10 mmol/g or less, more preferably 6 mmol/g or less, and still more preferably 5 mmol/g or less.
<7> The water-dispersible resin composition according to any one of <1> to <6>, wherein the content of the structure M in the resin α is preferably 1 to 10 mmol/g, more preferably 2 to 6 mmol/g, and still more preferably 3 to 5 mmol/g.
<8> The water-dispersible resin composition according to any one of <1> to <7>, wherein the resin α further includes, in the main chain thereof, a structure L that is different from the structure M and has two linked aromatic rings.
<9> The water-dispersible resin composition according to <8>, wherein the structure L is a structure having two aromatic rings linked preferably by a single bond, an ether group, or an alkyl methylene group, more preferably by a single bond or an ether group, and still more preferably by an ether group.
<10> The water-dispersible resin composition according to <8> or <9>, wherein the resin α includes at least one structure L.
<11> The water-dispersible resin composition according to any one of <1> to <10>, wherein the resin α has a glass transition temperature of preferably 150°C or more, more preferably 200°C or more, and still more preferably 210°C or more.
<12> The water-dispersible resin composition according to any one of <1> to <11>, wherein the resin α has a glass transition temperature of preferably 280°C or less, more preferably 250°C or less, and still more preferably 230°C or less.
<13> The water-dispersible resin composition according to any one of <1> to <12>, wherein the resin α has a glass transition temperature of preferably 150 to 280°C, more preferably 200 to 250°C, and still more preferably 210 to 230°C.
<14> The water-dispersible resin composition according to any one of <1> to <13>, wherein the resin α is preferably

at least one selected from the group consisting of polyphenylsulfone, polysulfone, polyetherimide, polyether ether ketone, polyphenylenesulfide, polyethersulfone, and polyamide-imide, more preferably at least one selected from the group consisting of polyphenylsulfone, polysulfone, polyetherimide, and polyethersulfone, still more preferably polyethersulfone, and still more preferably polyetherimide.

<15> The water-dispersible resin composition according to any one of <1> to <14>, wherein a content of the resin $\alpha$ in the water-dispersible resin composition is preferably 10 mass% or more, more preferably 15 mass% or more, and still more preferably 20 mass% or more.

<16> The water-dispersible resin composition according to any one of <1> to <15>, wherein the content of the resin $\alpha$ in the water-dispersible resin composition is preferably 80 mass% or less, more preferably 75 mass% or less, still more preferably 70 mass% or less, and still more preferably 65 mass% or less.

<17> The water-dispersible resin composition according to any one of <1> to <16>, wherein the content of the resin $\alpha$ in the water-dispersible resin composition is preferably 10 to 80 mass%, more preferably 15 to 75 mass%, and still more preferably 20 to 70 mass%, and is 20 to 65 mass%.

<18> The hydrophilic group is, for example, at least one selected from the group consisting of anionic groups, cationic groups, and nonionic groups. The water-dispersible resin composition according to any one of <1> to <17>, wherein among these groups, the hydrophilic groups is, from the same viewpoint, preferably at least one selected from the group consisting of anionic groups, and is a sulfonate group.

<19> The water-dispersible resin composition according to <18>, wherein the sulfonate group is represented by $-SO_3M$ (M represents a counterion of a sulfonic acid group that constitutes the sulfonate group, and from the viewpoint of achieving both the heat resistance and the water dispersibility of the water-dispersible resin composition, M is preferably at least one selected from the group consisting of metal ions and an ammonium ion, more preferably at least one selected from the group consisting of metal ions, still more preferably at least one selected from the group consisting of alkali metal ions and alkaline earth metal ions, still more preferably at least one selected from the group consisting of alkali metal ions, still more preferably at least one selected from the group consisting of a sodium ion and a potassium ion, and still more preferably a sodium ion).

<20> The water-dispersible resin composition according to any one of <1> to <19>, wherein a content of the hydrophilic group in the resin $\beta$ is preferably 0.5 mmol/g or more, more preferably 0.6 mmol/g or more, and still more preferably 0.7 mmol/g or more.

<21> The water-dispersible resin composition according to any one of <1> to <20>, wherein the content of the hydrophilic group in the resin $\beta$ is preferably 3 mmol/g or less, more preferably 2 mmol/g or less, and still more preferably 1.5 mmol/g or less.

<22> The water-dispersible resin composition according to any one of <1> to <21>, wherein the resin $\beta$ has a glass transition temperature of preferably 30°C or more and more preferably 70°C or more.

<23> The water-dispersible resin composition according to any one of <1> to <22>, wherein the resin $\beta$ has a glass transition temperature of preferably 280°C or less, more preferably 200°C or less, and still more preferably 170°C or less.

<24> The water-dispersible resin composition according to any one of <1> to <23>, wherein the resin $\beta$ includes: an aromatic dicarboxylic acid monomer unit A having a hydrophilic group; and a dicarboxylic acid monomer unit B having no hydrophilic group.

<25> The water-dispersible resin composition according to <24>, wherein an aromatic dicarboxylic acid A for deriving the aromatic dicarboxylic acid monomer unit A is preferably at least one selected from the group consisting of aromatic dicarboxylic acids having the hydrophilic group, more preferably at least one selected from the group consisting of anionic group-containing aromatic dicarboxylic acids, cationic group-containing aromatic dicarboxylic acids, and nonionic group-containing aromatic dicarboxylic acids, still more preferably at least one selected from the group consisting of sulfonate group-containing aromatic dicarboxylic acids, still more preferably at least one selected from the group consisting of sulfophthalic acids and sulfonaphthalenedicarboxylic acids, still more preferably at least one selected from the group consisting of sulfophthalic acids, still more preferably at least one selected from the group consisting of sulfoisophthalic acids and sulfoterephthalic acids, and still more preferably 5-sulfoisophthalic acid.

<26> The water-dispersible resin composition according to <24> or <25>, wherein a proportion of the aromatic dicarboxylic acid monomer unit A to a total of all monomer units in the resin $\beta$ is preferably 5 mol% or more, more preferably 7 mol% or more, and still more preferably 10 mol% or more.

<27> The water-dispersible resin composition according to any one of <24> to <26>, wherein the proportion of the aromatic dicarboxylic acid monomer unit A to the total of all the monomer units in the resin $\beta$ is preferably 30 mol% or less, more preferably 25 mol% or less, and still more preferably 20 mol% or less.

<28> The water-dispersible resin composition according to any one of <24> to <27>, wherein a proportion of the aromatic dicarboxylic acid monomer unit A to a total of all dicarboxylic acid monomer units in the resin $\beta$ is preferably 10 mol% or more, more preferably 15 mol% or more, and still more preferably 20 mol% or more.

<29> The water-dispersible resin composition according to any one of <24> to <28>, wherein the proportion of the aromatic dicarboxylic acid monomer unit A to the total of all the dicarboxylic acid monomer units in the resin β is preferably 50 mol% or less, more preferably 40 mol% or less, and still more preferably 35 mol% or less.
<30> The water-dispersible resin composition according to any one of <24> to <29>, wherein a dicarboxylic acid B for deriving the dicarboxylic acid monomer unit B is preferably at least one selected from the group consisting of aromatic dicarboxylic acids not having the hydrophilic group and aliphatic dicarboxylic acids not having the hydrophilic group, more preferably at least one selected from the group consisting of phthalic acid, furandicarboxylic acids, naphthalenedicarboxylic acids, cyclohexanedicarboxylic acids, and adamantanedicarboxylic acids, still more preferably at least one selected from the group consisting of terephthalic acid, isophthalic acid, 2,5-furandicarboxylic acid, 2,6-naphthalenedicarboxylic acid, 1,4-cyclohexanedicarboxylic acid, and 1,3-adamantanedicarboxylic acid, still more preferably terephthalic acid, 2,5-frandicarboxylic acid, and 2,6-naphthalenedicarboxylic acid, and still more preferably 2,6-naphthalenedicarboxylic acid.
<31> The water-dispersible resin composition according to any one of <24> to <30>, wherein a proportion of an amount of substance of the dicarboxylic acid monomer unit B to a total amount of substance of all the monomer units in the resin β is preferably 15 mol% or more, more preferably, still more preferably 25 mol% or more, and still more preferably 30 mol% or more.
<32> The water-dispersible resin composition according to any one of <24> to <31>, wherein the proportion of the amount of substance of the dicarboxylic acid monomer unit B to the total amount of substance of all the monomer units in the resin β is preferably 45 mol% or less, more preferably 42 mol% or less, and still more preferably 40 mol% or less.
<33> The water-dispersible resin composition according to any one of <24> to <32>, wherein a proportion of the dicarboxylic acid monomer unit B to the total of all the dicarboxylic acid monomer units in the resin β is preferably 30 mol% or more, more preferably 50 mol% or more, and still more preferably 70 mol% or more.
<34> The water-dispersible resin composition according to any one of <24> to <33>, wherein the proportion of the dicarboxylic acid monomer unit B to the total of all the dicarboxylic acid monomer units in the resin β is preferably 90 mol% or less, more preferably 85 mol% or less, and still more preferably 80 mol% or less.
<35> The water-dispersible resin composition according to any one of <24> to <34>, wherein a molar ratio of the aromatic dicarboxylic acid monomer unit A to the dicarboxylic acid monomer unit B (the aromatic dicarboxylic acid monomer unit A/the dicarboxylic acid monomer unit B) in the resin β is preferably 10/90 or more, more preferably 15/85 or more, and still more preferably 20/80 or more.
<36> The water-dispersible resin composition according to any one of <24> to <35>, wherein the molar ratio of the aromatic dicarboxylic acid monomer unit A to the dicarboxylic acid monomer unit B (the aromatic dicarboxylic acid monomer unit A/the dicarboxylic acid monomer unit B) in the resin β is preferably 60/40 or less, more preferably 40/60 or less, and still more preferably 30/70 or less.
<37> The water-dispersible resin composition according to any one of <1> to <36>, wherein the resin β includes a monomer unit C derived from a monomer having two functional groups reactive with a carboxy group.
<38> The water-dispersible resin composition according to <37>, wherein the monomer unit C is preferably a monomer unit derived from at least one selected from the group consisting of diols, diamines, and alkanolamines, more preferably an aliphatic diol monomer unit derived from an aliphatic diol, an aromatic diol monomer unit derived from an aromatic diol, or an aliphatic diamine monomer unit derived from an aliphatic diamine, and still more preferably an aliphatic diol monomer unit.
<39> The water-dispersible resin composition according to <38>, wherein the aliphatic diol for deriving the aliphatic diol monomer unit preferably has 2 or more carbon atoms.
<40> The water-dispersible resin composition according to <38> or <39>, wherein the aliphatic diol for deriving the aliphatic diol monomer unit preferably has 31 or less carbon atoms, more preferably 25 or less carbon atoms, still more preferably 20 or less carbon atoms, and still more preferably 15 or less carbon atoms.
<41> The water-dispersible resin composition according to <39> or <40>, wherein the aliphatic diol has an ether oxygen atom.
<42> The water-dispersible resin composition according to any one of <39> to <41>, wherein the aliphatic diol is preferably at least one selected from the group consisting of a chain diol and a cyclic diol, and still more preferably a chain diol.
<43> The water-dispersible resin composition according to <42>, wherein the chain diol has 2 or more carbon atoms.
<44> The water-dispersible resin composition according to <42> or <43>, wherein the chain diol has preferably 6 or less carbon atoms, more preferably 4 or less carbon atoms, still more preferably 3 or less carbon atoms, and still more preferably 2 carbon atoms.
<45> The water-dispersible resin composition according to any one of <42> to <44>, wherein the chain diol has 1 or less ether oxygen atom.
<46> The water-dispersible resin composition according to any one of <42> to <45>, wherein the cyclic diol has 2

or less ether oxygen atoms.

<47> The water-dispersible resin composition according to any one of <42> to <46>, wherein the chain diol is at least one selected from the group consisting of ethylene glycol, 1,2-propanediol, 1,3-propanediol, diethylene glycol, and dipropylene glycol, more preferably at least one selected from the group consisting of ethylene glycol, 1,2-propanediol, and 1,3-propanediol, and still more preferably ethylene glycol.

<48> The water-dispersible resin composition according to any one of <38> to <47>, wherein the aliphatic diamine is a chain diamine.

<49> The water-dispersible resin composition according to <48>, wherein the chain diamine has preferably 2 or more carbon atoms, more preferably 3 or more carbon atoms, and still more preferably 4 or more carbon atoms.

<50> The water-dispersible resin composition according to <48> or <49>, wherein the chain diamine has preferably 12 or less carbon atoms, more preferably 10 or less carbon atoms, and still more preferably 8 or less carbon atoms.

<51> The water-dispersible resin composition according to any one of <48> to <50>, wherein the chain diamine is preferably at least one selected from the group consisting of alkyldiamines, and more preferably hexamethylenediamine.

<52> The water-dispersible resin composition according to any one of <1> to <51>, wherein the resin β is preferably a polyester, a polyamide, or a polyesteramide, more preferably a polyester or a polyamide, and still more preferably a resin including a unit represented by a General Formula (3) below and a unit represented by a General Formula (4) below.

[Formula 7]

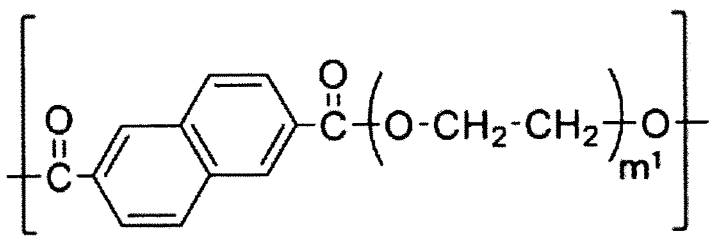

(3)

[Formula 8]

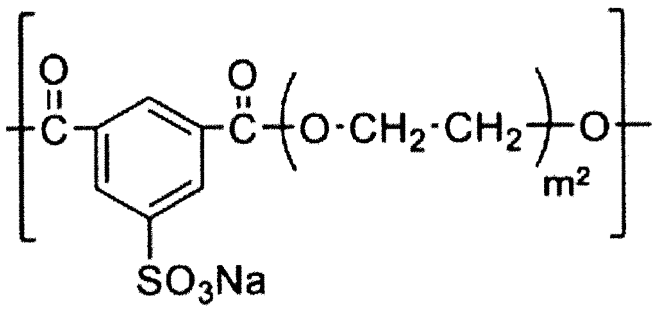

(4)

In the General Formulae (3) and (4), $m^1$ and $m^2$ represent the average number of moles of ethylene glycol monomer units added and are each 1 to 3, preferably 1. The units of the General Formulae (3) and (4) are bonded in a block bond or a random bond, preferably in a random bond.

<53> The water-dispersible resin composition according to any one of <1> to <52>, wherein the resin β has a weight average molecular weight of preferably 5000 or more, more preferably 10000 or more, and still more preferably 13000 or more.

<54> The water-dispersible resin composition according to any one of <1> to <53>, wherein the resin β has a weight average molecular weight of preferably 50000 or less, more preferably 40000 or less, still more preferably 30000 or less, and still more preferably 20000 or less.

<55> The water-dispersible resin composition according to any one of <1> to <54>, wherein a content of the resin β in the water-dispersible resin composition is preferably 25 mass% or more, more preferably 35 mass% or more, and still more preferably 40 mass% or more.

<56> The water-dispersible resin composition according to any one of <1> to <55>, wherein the content of the resin

$\beta$ in the water-dispersible resin composition is preferably 90 mass% or less, more preferably 80 mass% or less, and still more preferably 70 mass% or less.

<57> The water-dispersible resin composition according to any one of <1> to <56>, wherein a mass ratio of the content of the resin $\beta$ to the content of the resin $\alpha$ (the content of the resin $\beta$/the content of the resin $\alpha$) contained in the water-dispersible resin composition is preferably 25/75 or more, more preferably 35/65 or more, and still more preferably 40/60 or more.

<58> The water-dispersible resin composition according to any one of <1> to <57>, wherein the mass ratio of the content of the resin $\beta$ to the content of the resin $\alpha$ (the content of the resin $\beta$/the content of the resin $\alpha$) contained in the water-dispersible resin composition is preferably 90/10 or less, more preferably 80/20 or less, and still more preferably 75/25 or less.

<59> The water-dispersible resin composition according to any one of <1> to <58>, wherein the mass ratio of the content of the resin $\beta$ to the content of the resin $\alpha$ (the content of the resin $\beta$/the content of the resin $\alpha$) contained in the water-dispersible resin composition is 25/75 to 90/10, more preferably 35/65 to 80/20, and still more preferably 40/60 to 75/25.

<60> The water-dispersible resin composition according to any one of <1> to <59>, wherein a molar ratio of the content of the hydrophilic group in the resin $\beta$ to the content of the structure M in the resin $\alpha$ (the content of the structure M/the content of the hydrophilic group) contained in the water-dispersible resin composition is preferably 40/60 or more, more preferably 45/55 or more, and still more preferably 50/50 or more.

<61> The water-dispersible resin composition according to any one of <1> to <60>, wherein the molar ratio of the content of the hydrophilic group in the resin $\beta$ to the content of the structure M in the resin $\alpha$ (the content of the structure M/the content of the hydrophilic group) contained in the water-dispersible resin composition is preferably 99/1 or less, more preferably 90/10 or less, and still more preferably 85/15 or less.

<62> The water-dispersible resin composition according to any one of <1> to <61>, wherein the molar ratio of the content of the hydrophilic group in the resin $\beta$ to the content of the structure M in the resin $\alpha$ (the content of the structure M/the content of the hydrophilic group) contained in the water-dispersible resin composition is preferably 40/60 to 99/1, more preferably 45/55 to 90/10, and still more preferably 50/50 to 85/15.

<63> The water-dispersible resin composition according to any one of <1> to <62>, containing a water-insoluble resin $\gamma$ having preferably an epoxy group, a carbodiimide group, or an acid anhydride group, and more preferably an epoxy group.

<64> The water-dispersible resin composition according to <63>, wherein a content of the water-insoluble resin $\gamma$ in the water-dispersible resin composition is preferably 1 mass% or more, more preferably 3 mass% or more, and still more preferably 5 mass% or more.

<65> The water-dispersible resin composition according to <63> or <64>, wherein the content of the water-insoluble resin $\gamma$ in the water-dispersible resin composition is preferably 40 mass% or less, more preferably 30 mass% or less, and still more preferably 20 mass% or less.

<66> The water-dispersible resin composition according to any one of <63> to <65>, wherein a mass ratio of the resin $\beta$ to the water-insoluble resin $\gamma$ (a mass of the resin $\beta$/a mass of the water-insoluble resin $\gamma$) in the water-dispersible resin composition is preferably 50/50 or more, more preferably 60/40 or more, and still more preferably 70/30 or more.

<67> The water-dispersible resin composition according to any one of <63> to <66>, wherein the mass ratio of the resin $\beta$ to the water-insoluble resin $\gamma$ (the mass of the resin $\beta$/the mass of the water-insoluble resin $\gamma$) in the water-dispersible resin composition is preferably 95/5 or less, more preferably 93/7 or less, and still more preferably 90/10 or less.

<68> The water-dispersible resin composition according to any one of <1> to <67>, containing an organic salt compound $\delta$ represented by a General Formula (5) below.

$$(R\text{-}SO_3^-)_nQ^{n+} \qquad (5)$$

(In the General Formula (5), R represents a hydrocarbon group that may have a substituent and has 1 to 30 carbon atoms, n represents a number of 1 or 2, $Q^{n+}$ represents a monovalent cation, preferably an alkali metal ion, an ammonium ion, or a phosphonium ion when n is 1, and $Q^{n+}$ represents a divalent cation, preferably an alkaline earth metal ion or a transition metal ion when n is 2.)

<69> The water-dispersible resin composition according to <68>, wherein in the General Formula (5), R is an aliphatic hydrocarbon group, an alicyclic hydrocarbon group, or an aromatic hydrocarbon group.

<70> The water-dispersible resin composition according to <68> or <69>, wherein the hydrocarbon group represented by R in the General Formula (5) preferably has 6 or more carbon atoms, more preferably 10 or more carbon atoms, and still more preferably 12 or more carbon atoms.

<71> The water-dispersible resin composition according to <68> to <70>, wherein the hydrocarbon group represented by R in the General Formula (5) preferably has 30 or less carbon atoms, more preferably 25 or less carbon atoms, and still more preferably 20 or less carbon atoms.

<72> The water-dispersible resin composition according to any one of <68> to <71>, wherein the aromatic hydrocarbon group represented by R in the General Formula (5) is preferably a phenyl group having at least one substituent, more preferably a phenyl group having a branched or linear alkyl group or alkenyl, and still more preferably a phenyl group having a branched or linear alkyl group.

<73> The water-dispersible resin composition according to any one of <68> to <72>, wherein in the General Formula (5), $Q^{n+}$ is preferably a monovalent cation, more preferably an alkali metal ion, an ammonium ion, or a phosphonium ion, still more preferably a tetraalkylphosphonium ion, and still more preferably a tetrabutylphosphonium ion.

<74> The water-dispersible resin composition according to any one of <68> to <73>, wherein in the General Formula (5), n is 1.

<75> The water-dispersible resin composition according to any one of <68> to <74>, wherein a content of the organic salt compound δ in the water-dispersible resin composition is preferably 0.1 mass% or more, more preferably 1 mass% or more, and still more preferably 2 mass% or more.

<76> The water-dispersible resin composition according to any one of <68> to <75>, wherein the content of the organic salt compound δ in the water-dispersible resin composition is preferably 15 mass% or less, more preferably 10 mass% or less, and still more preferably 5 mass% or less.

<77> The water-dispersible resin composition according to any one of <68> to <76>, wherein a ratio of an amount of substance (mol) of an alkyl sulfonic acid ion ($R-SO_3^-$) in the organic salt compound δ to a total amount of substance (mol) of the hydrophilic group and the sulfonate group included in the resin β (the amount of substance of an alkyl sulfonic acid ion in the organic salt compound δ/a total amount of substance of the hydrophilic group and the sulfonate group in the water-soluble resin) is preferably 0.005 or more, more preferably 0.01 or more, and still more preferably 0.02 or more.

<78> The water-dispersible resin composition according to any one of <68> to <77>, wherein the ratio of the amount of substance (mol) of the alkyl sulfonic acid ion ($R-SO_3^-$) in the organic salt compound δ to the total amount of substance (mol) of the hydrophilic group and the sulfonate group included in the resin β (the amount of substance of the alkyl sulfonic acid ion in the organic salt compound/the total amount of substance of the hydrophilic group and the sulfonate group in the water-soluble resin) is preferably 0.35 or less, more preferably 0.25 or less, and still more preferably 0.2 or less.

<79> A soluble material for three-dimensional modeling, the soluble material including the water-dispersible resin composition according to any one of <1> to <78>.

<80> A support material configured to support a three-dimensional object when the three-dimensional object is produced by a fused deposition modeling 3D printer, the support material including the water-dispersible resin composition according to any one of <1> to <79>.

<81> Use of the soluble material for three-dimensional modeling according to <79> as a support material when a three-dimensional object is produced by a fused deposition modeling 3D printer.

EXAMPLES

The pressure is expressed in an absolute pressure. The term "normal pressure" refers to 101.3 kPa.

<Method for preparing resin composition>

[Preparation of resin composition 1]

Into a 2 L stainless steel separable flask (with a K tube, a stirrer, and a nitrogen inlet tube) were charged 97.7 g of dimethyl 2,6-naphthalenedicarboxylate (manufactured by Tokyo Chemical Industry Co., Ltd., first class), 40.6 g of dimethyl sodium 5-sulfoisophthalate (manufactured by Wako Pure Chemical Industries, Ltd.), 76.7 g of ethylene glycol (manufactured by Wako Pure Chemical Industries, Ltd., highest quality), 82 mg of titanium tetrabutoxide (manufactured by Tokyo Chemical Industry Co., Ltd., first class), and 506 mg of sodium acetate (manufactured by Wako Pure Chemical Industries, Ltd., highest quality), the mixture was heated by a mantle heater under stirring at normal pressure in a nitrogen atmosphere while the temperature of the surface of the heater was raised from 140°C to 260°C over 1 hour, and the mixture was stirred at the temperature for 6 hours and 30 minutes to undergo a transesterification reaction. Then, 6.89 g of tetrabutylphosphonium dodecylbenzenesulfonate (manufactured by TAKEMOTO OIL & FAT Co., Ltd., product name: ELECUT S-418) was added, and the mixture was stirred for 15 minutes. Then, the temperature of the surface of the heater was raised from 260 to 290°C over 30 minutes, the pressure was simultaneously reduced from normal pressure to 2 kPa, and the mixture was reacted for 1 hour and a half under these conditions. Thereafter, the mixture was reacted under stirring at 800 Pa for 30 minutes, and then the temperature of the surface of the heater was raised from 290°C to

295°C. The mixture was reacted under stirring at 400 Pa for 2 hours, and thereafter reacted under stirring while the degree of pressure reduction was gradually increased to 100 Pa. A resin composition 1 containing a resin β**1** was thus obtained. Table 1 shows the contents of the resin β1 and the organic salt compound δ contained in the resin composition 1, and the glass transition temperature of the resin composition 1. In this preparation, it was assumed that excessive ethylene glycol was distilled away from the reaction system and the diol unit and the dicarboxylic acid units were reacted in equal amount. Table 2 shows the proportion of each of the monomer unit A and the monomer unit B to the total of all the dicarboxylic acid monomer units in the resin β1 contained in the resin composition 1, and the weight average molecular weight and the content of the hydrophilic group of the resin β1**.** The proportion of the monomer unit A was calculated by the NMR analysis described below, and the proportion of the monomer unit B was calculated form the charged amount thereof.

[Preparation of resin composition 8]

Into the same equipment as in the preparation of the resin composition 1, dimethyl 2,6-naphthalenedicarboxylate (manufactured by Tokyo Chemical Industry Co., Ltd., first class), dimethyl sodium 5-sulfoisophthalate (manufactured by Wako Pure Chemical Industries, Ltd.), ethylene glycol (manufactured by Wako Pure Chemical Industries, Ltd., highest quality), titanium tetrabutoxide (manufactured by Tokyo Chemical Industry Co., Ltd., first class), and sodium acetate (manufactured by Wako Pure Chemical Industries, Ltd., highest quality) were charged in the same mass ratio as in the preparation of the resin composition 1. Subsequently, the mixture was heated by a mantle heater under stirring at normal pressure in a nitrogen atmosphere while the temperature of the surface of the heater was raised from 140°C to 260°C over 1 hour, and the mixture was stirred at the temperature for 6 hours and 30 minutes to undergo a transesterification reaction. Then, the temperature of the surface of the heater was raised from 260 to 290°C over 30 minutes, the pressure was simultaneously reduced from normal pressure to 3 kPa, and the mixture was reacted for 1 hour and a half under these conditions. Thereafter, the mixture was reacted under stirring at 2000 Pa for 45 minutes, and after the temperature of the surface of the heater was then raised from 290°C to 295°C, the mixture was reacted under stirring for 2 hours while the degree of pressure reduction was increased to 500 Pa. A resin composition 8 containing a resin β2 was thus obtained. In this preparation, it was assumed that excessive ethylene glycol was distilled away from the reaction system and the diol unit and the dicarboxylic acid units were reacted in equal amount. Table 1 shows the glass transition temperature of the resin composition 8. Table 2 shows the proportion of each of the monomer unit A and the monomer unit B to the total of all the dicarboxylic acid monomer units in the resin β2 contained in the resin composition 8, and the weight average molecular weight and the content of the hydrophilic group of the resin β2**.** The proportion of the monomer unit A was calculated by the NMR analysis described below, and the proportion of the monomer unit B was calculated form the charged amount thereof.

[Preparation of resin composition 11]

Into a glass reactor having an internal capacity of 500 mL and equipped with a stirring blade, 100 g of N-methylpyrrolidone (manufactured by Tokyo Chemical Industry Co., Ltd.) was placed. Subsequently charged into the reactor were 3.62 g of terephthalic acid (manufactured by Tokyo Chemical Industry Co., Ltd.), 2.19 g of monosodium 5-sulfoisophthalate (manufactured by Tokyo Chemical Industry Co., Ltd.), 3.48 g of hexamethylenediamine (manufactured by Tokyo Chemical Industry Co., Ltd.), and 6.06 g of 4-methylmorpholine (manufactured by Tokyo Chemical Industry Co. , Ltd.), and the mixture was stirred at 70 rpm for 2 hours. Then, the temperature of the reactor was lowered to 5°C, 20.7 g of 4-(4,6-dimethoxy-1,3,5-triazine-2-yl)-4-methylmorpholinium chloride (manufactured by Tokyo Chemical Industry Co., Ltd.) was added, and the mixture was continuously stirred in the air for 6 hours while the reactor was maintained at 5°C. The reactor was returned to room temperature after the mixture was reacted, a DMF/methanol mixed solution (mass ratio: 2/1) was poured, and the mixture was allowed to stand to precipitate the resin. The resin was separated by filtration and dried at 150°C under reduced pressure (1 kPa or less) for 12 hours or more. A resin composition 11 containing a resin β3 was thus obtained. Table 1 shows the glass transition temperature of the resin composition 11. Table 2 shows the proportion of each of the monomer unit A and the monomer unit B to the total of all the dicarboxylic acid monomer units in the resin β2 contained in the resin composition 11, and the weight average molecular weight and the content of the hydrophilic group of the resin β2.

[Table 1]

| | Content (mass%) | | | | Glass transition temperature (°C) |
|---|---|---|---|---|---|
| | Resin β1 | Resin β2 | Resin β3 | Organic salt compound δ | |
| Resin composition 1 | 95.2 | - | - | 4.8 | 108 |

(continued)

| | Content (mass%) | | | | Glass transition temperature (°C) |
|---|---|---|---|---|---|
| | Resin β1 | Resin β2 | Resin β3 | Organic salt compound δ | |
| Resin composition 8 | - | 100 | - | - | 107 |
| Resin composition 11 | - | - | 100 | - | 168 |

[Table 2]

| | Proportion of monomer unit to total of all dicarboxylic acid monomer units [mol%] | | Content of hydrophilic group [mmol/g] | Weight average molecular weight |
|---|---|---|---|---|
| | A | B | | |
| Resin β1 | 25 | 75 | 1.0 | 19500 |
| Resin β2 | 25 | 75 | 1.0 | 17300 |
| Resin β3 | 27 | 73 | 1.0 | 14200 |

[Resin α]

Table 3 shows the molecular weight of the monomer unit in the resin α, the content of the structure M in the monomer unit, and the content of the structure M in the resin α. The content of the structure M in the resin α was calculated using an equation below.

$$\text{The content (mmol/g) of the structure M in the resin } \alpha = 1000 \times \text{the content of the structure M in the monomer unit / the molecular weight of the monomer unit in the resin } \alpha$$

[Preparation of resin compositions 2 to 7, 9, and 10]

The raw materials shown in Table 4 were melt-kneaded using a melt kneader (manufactured by Toyo Seiki Seisaku-sho, Ltd.: Labo Plastmill 4C150) at 290°C and 90 r/min for 10 minutes. Resin compositions 2 to 7, 9, and 10 were thus obtained as brown mixtures.

The resins α and the water-insoluble resin γ in Tables 3 and 4 are as follows.

Polyethersulfone: manufactured by Stratasys Ltd., support material for ULTEM1010
Polyphenylsulfone: Stratasys Ltd., PPSF
Polyetherimide: Stratasys Ltd., ULTEM1010 modeling material
Ethylene-vinyl acetate-glycidyl methacrylate copolymer: Sumitomo Chemical Co., Ltd., Bondfast 7B

[Preparation of resin composition 12]

1,1,1,3,3,3-Hexafluoro-2-propanol (manufactured by FUJIFILM Wako Pure Chemical Corporation) solutions respectively having 5 mass% of the raw materials shown in Table 5 were adjusted and blended in parts by mass shown in Table 5. A 1,1,1,3,3,3-hexafluoro-2-propanol solution containing the resin α and the resin β3 was thus obtained. These solutions were poured into an aluminum cup and dried under the conditions of 50°C and 1 kPa or less under reduced pressure for 12 hours or more. A resin composition 12 was thus obtained.

The resin α in Table 5 is as follows.
Polyethersulfone: manufactured by Solvay S.A., Veradel 3300 PREM

<Analysis method>

[Proportion of amount of substance of monomer unit (hereinafter, referred to as monomer unit A) derived from dimethyl sodium 5-sulfoisophthalate to total amount of substance of all monomer units in resin]

A sample was dissolved in a mixed solvent of deuterated chloroform and deuterated trifluoroacetic acid, and an amount of substance A obtained by dividing an integral value A of a peak derived from a benzene ring in a monomer unit (monomer unit A) derived from dimethyl sodium 5-sulfoisophthalate by the number of protons corresponding to the benzene ring in the monomer unit A and an amount of substance B obtained by dividing an integral value B of a peak derived from a naphthalene ring in a monomer unit (hereinafter, referred to as a monomer unit B) derived from dimethyl 2,6-naphthalenedicarboxylate by the number of protons corresponding to the naphthalene ring in the monomer unit B were calculated by proton NMR measurement using NMR MR400 manufactured by Agilent Technologies, Inc. The value obtained by dividing the amount of substance A by 2 times the sum of the amount of substance A and the amount of substance B and expressed in percentage (100 × amount of substance A/ (2 × (amount of substance A + amount of substance B))) was defined as the proportion of the amount of substance of the monomer unit A to the total amount of substance of all the monomer units in the water-soluble polyester resin.

[Weight average molecular weight (Mw)]

(Resin compositions 1 and 8)

A calibration curve was made from standard polystyrene using gel permeation chromatography (GPC) under the following conditions to determine the weight average molecular weight (Mw) of the resin β1 or β2 in the resin composition.

- Apparatus: HLC-8320 GPC (manufactured by TOSOH CORPORATION, detector integrated type)
- Column: α-M × 2 columns (manufactured by TOSOH CORPORATION, 7.8 mmI.D. × 30 cm)
- Eluent: 60 mmol/L phosphoric acid + 50 mmol/L brominated lithium dimethylformamide solution
- Flow rate: 1.0 mL/min
- Column temperature: 40°C
- Detector: RI detector
- Standard substance: polystyrene

(Resin composition 11)

A calibration curve was made from standard polymethyl methacrylate under the same conditions as in the resin compositions 1 and 8 except for the following conditions to determine the weight average molecular weight (Mw) of the resin β3 in the resin composition.

- Column: TSK-Gel Super AWM-H (manufactured by TOSOH CORPORATION)
- Eluent: HFIP/0.5 mM sodium trifluoroacetate
- Flow rate: 0.2 mL/min
- Standard substance: polymethyl methacrylate (PMMA)

[Glass transition temperature]

A sample (5 to 10 mg) was precisely weighed, sealed in an aluminum pan, and heated using a DSC apparatus (DSC 7020 manufactured by Seiko Instruments Inc.) at 10°C/min from 30°C to 300°C and then cooled to 30°C with the cooling rate set to 150°C/min. The sample was heated again at 10°C/min to 300°C to obtain a DSC curve, from which the glass transition temperature (°C) was determined. In the heating, a baseline at which the calorific value is constant appears, and then an inflection point appears due to glass transition. The temperature at an intersection of a straight line obtained by extending the baseline to the high temperature side and a tangent at the inflection point was defined as the glass transition temperature. Tables 4 to 6 shows the results.

<Evaluation method>

[Water dispersibility test for resin composition]

Each of the resin compositions 2 to 7, 9, and 10 was melted using Capilograph (1D manufactured by Toyo Seiki Seisaku-sho, Ltd.) at a barrel temperature of 210 to 250°C, extruded from a 2 mm diameter and 10 mm long capillary at an extrusion rate of 10 mm/min, and processed into an about 1.8 mm diameter filament while lightly and manually pulled with the tip thereof held with tweezers. The filament of each of the resin compositions 2 to 7, 9, and 10 was cut into a 5 to 10 cm long piece, and the cut filament was charged into 500 g of deionized water at 80°C in a 500 mL beaker, stirred at 300 rpm using a magnetic stirrer to disperse the resin composition in the water. The time (water dispersion time) taken for the filament to be cut was thereby measured. Table 4 shows the results. Comparative Examples 1 to 3 had a filament shape (a diameter of about 1.8 mm) and was therefore measured for the water dispersion time without any processing. The term "not dispersible" in Table 4 means that the filament was not cut after a lapse of 60 minutes.

[Preparation of film]

(Example 9)

The raw materials shown in Table 5 were dissolved in 1,1,1,3,3,3-hexafluoro-2-propanol (manufactured by FUJIFILM Wako Pure Chemical Corporation) to prepare solutions each having a concentration of 5 mass%. A mixed solution was obtained by placing 0.3 g of the solution of the resin α and 0.7 g of the solution of the resin β3 in a glass bottle. Two drops of this mixed solution were dropped onto a slide glass using a dropper, and dried at 50°C under reduced pressure (1 kPa or less) for 2 hours to prepare a film having a thickness of 25 μm. The thickness of the slide glass before the solution was dropped and the total thicknesses of the film and the slide glass were measured using a micrometer, and the thickness of the film was calculated from the difference.

(Comparative Example 4)

A film having a thickness of 25 μm was prepared by performing the same operations as in Example 9 except that two drops of the solution of the resin α shown in Table 5 was dropped onto a slide glass using a dropper.

[Evaluation of appearance of film]

The appearance of each of the films was visually evaluated. Table 5 shows the results.

[Evaluation of water dispersibility]

Deionized water (500 mL) was charged into a 500 mL beaker, heated to 95°C on a hot plate, and maintained at the temperature until the end of this evaluation. The slide glass having the film formed thereon was put in the beaker, and the sample, i.e., the slide glass on which the film was formed, was immersed in the heated deionized water. The time taken for the film on the slide glass to be removed from the slide glass was visually observed. Table 5 shows the results. In Table 5, the term "insoluble" represents a state where the presence of the film is observed even 120 minutes after the slide glass was immersed in the deionized water.

[Table 3]

| | Molecular weight of monomer unit | Structure M in monomer unit | Content (pieces) of structure M in monomer unit | Content of structure M in resin α (mmol/g) |
|---|---|---|---|---|
| Polyethersulfone | 224 | Sulfonyl group | 1 | 4.5 |
| Polyphenylsulfone | 384 | Sulfonyl group | 1 | 2.6 |
| Polyetherimide | 568 | Imide group | 2 | 3.5 |

[Table 4]

| | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|
| Resin composition | | Resin composition 2 | Resin composition 3 | Resin composition 4 | Resin composition 5 | Resin composition 6 | Resin composition 7 | Resin composition 9 | Resin composition 10 | | | |
| Resin α | Polyethersulfone | 50.0 | 30.0 | - | - | - | - | 20.0 | 30.0 | 100 | - | - |
| | Polyphenylsulfone | - | - | 50.0 | 30.0 | - | 40.0 | - | - | - | 100 | - |
| | Polyetherimide | - | - | - | - | 30.0 | - | - | - | - | - | 100 |
| Resin β | Resin β1 | 47.6 | 66.6 | 47.6 | 66.6 | 66.6 | 47.6 | 57.1 | - | - | - | - |
| | Resin β2 | | | | | | | - | 70.0 | | | |
| Water-insoluble resin γ | Ethylene-vinyl acetate-glycidyl methacrylate copolymer | - | - | - | - | - | 10 | 20.0 | - | - | - | - |
| Organic salt compound δ | Tetrabutylphosphonium dodecylbenzenesulfonate | 2.4 | 3.4 | 2.4 | 3.4 | 3.4 | 2.4 | 2.9 | - | - | - | - |
| Content of structure M/content of hydrophilic group (molar ratio) | | 82/18 | 67/33 | 73/27 | 54/46 | 61/39 | 69/31 | 61/39 | 66/34 | - | - | - |
| Glass transition temperature (°C) | | 220 | 223, 115 | 205 | 205, 115 | 194, 110 | 199 | 219, 115 | 223, 122 | 227 | 216 | 212 |

(continued)

| | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|
| Resin composition | Resin composition 2 | Resin composition 3 | Resin composition 4 | Resin composition 5 | Resin composition 6 | Resin composition 7 | Resin composition 9 | Resin composition 10 | | | |
| Filament water dispersion time | 18 min | 8 min | 25 min | 10 min | 3 min | 20 min | 3 min | 12 min | Not dispersible | Not dispersible | Not dispersible |

*The used amount of the raw materials in Table 4 is shown in mass proportion.
*Two glass transition temperatures were detected in Examples 2, 4, 5, 7, and 8 of Table 4.

[Table 5]

| | | Example 9 | Comparative Example 4 |
|---|---|---|---|
| Resin composition | | Resin composition 12 | |
| Resin a | Polyethersulfone | 30.0 | 100 |
| Resin composition 11 | | 70.0 | - |
| Content of structure M/content of hydrophilic group (molar ratio) | | 66/34 | - |
| Glass transition temperature (°C) | | 218, 171 | 227 |
| Appearance of film | | White turbidity | Colorless and transparent |
| Water dispersibility 95°C (fine dispersion time/visual observation) | | 30 min | Insoluble |
| *The used amount of the raw materials in Table 5 is shown in mass proportion.<br>*Two glass transition temperatures were detected in Example 9 of Table 5. | | | |

[Morphology observation]

A sample of the resin composition 3 was pressed using a pressing machine (LABO PRESS P2-30T manufactured by Toyo Seiki Seisaku-sho, Ltd.) at 290°C and 0.5 MPa for 2 minutes and subsequently at 290°C and 20 MPa for 2 minutes. The sample was then rapidly cooled to prepare a 0.4 mm thick sheet. The sheet was bent and fractured in liquid nitrogen. The sheet was soaked in water at 80°C for 30 seconds to dissolve the resin β on the fractured surface. Then, the sample was dried at 60°C under reduced pressure (1 kPa or less) for 2 hours. After the drying, the fractured surface of the sample was observed by an SEM (VE-8800 manufactured by KEYENCE CORPORATION). Fig. 1 shows an SEM photograph of the resin composition 3.

It is understood from Fig. 1 that the structures derived from the resins α and β form a mutual continuous phase.

[Production of resin composition with use of a twin-screw kneader]

The raw materials shown in Table 6 were melt-kneaded by a co-rotating intermeshing twin-screw kneader (manufactured by The Japan Steel Works, Ltd., TEX28V (screw diameter 28 mm, L/D = 42)) at a discharge rate of 20 kg/h, a rotating speed of 250 rpm, and 270°C. Resin compositions 13 and 14 were thus obtained. The resin α and the water-insoluble resins γ in Table 6 are as follows.

Polyethersulfone: manufactured by Solvay S.A., Veradel 3300 PREM
Ethylene-vinyl acetate-glycidyl methacrylate copolymer: Sumitomo Chemical Co., Ltd., Bondfast 7B
Ethylene-glycidyl methacrylate copolymer: Sumitomo Chemical Co., Ltd., Bondfast CG5001
Ethylene-methyl acrylate-glycidyl methacrylate copolymer: Sumitomo Chemical Co., Ltd., Bondfast 7M
Modified styrene-glycidyl methacrylate copolymer: BASF SE, JONCRYL ADR4468

<Evaluation method>

[Water dispersibility test for resin composition]

Each of the resin compositions 13 and 14 was melted using Capilograph (1D manufactured by Toyo Seiki Seisaku-sho, Ltd.) at a barrel temperature of 210 to 250°C, extruded from a 2 mm diameter and 10 mm long capillary at an extrusion rate of 10 mm/min, and processed into an about 1.8 mm diameter filament while lightly and manually pulled with the tip thereof held with tweezers. The filament of each of the resin compositions 13 and 14 was cut into a 5 to 10 cm long piece, and the cut filament was charged into 500 g of deionized water at 80°C in a 500 mL beaker, stirred at 300 rpm using a magnetic stirrer to disperse the resin composition in the water. The time (water dispersion time) taken for the filament to be cut was thereby measured. Table 6 shows the results.

[Table 6]

| | | Example 10 | Example 11 |
|---|---|---|---|
| Resin composition | | Resin composition 13 | Resin composition 14 |
| Resin α | Polyethersulfone | 16.0 | 22.2 |
| Resin β | Resin β1 | 57.1 | 63.6 |
| Water-insoluble resin γ | Ethylene-vinyl acetate-glycidyl methacrylate copolymer | 8.0 | 10.0 |
| | Ethylene-glycidyl methacrylate copolymer | 8.0 | - |
| | Ethylene-methyl acrylate-glycidyl methacrylate copolymer | 8.0 | - |
| | Modified styrene-glycidyl methacrylate copolymer | - | 1.0 |
| Organic salt compound δ | Tetrabutylphosphonium dodecylbenzenesulfonate | 2.9 | 3.2 |
| Content of structure M/content of hydrophilic group (molar ratio) | | 56/44 | 61/39 |
| Glass transition temperature (°C) | | 219 | 217 |
| Filament water dispersion time | | 5 min | 3 min |
| *The used amount of the raw materials in Table 6 is shown in mass proportion. | | | |

[Example 12]

A filament of the resin composition 13 was supplied to fused deposition modeling 3D printer FUNMAT PRO410 manufactured by INTAMSYS TECHNOLOGY CO., LTD. and extruded from a heated nozzle having a temperature of 300°C. It was confirmed that the filament could be discharged without clogging the nozzle and the molten filament was immediately solidified.

[Example 13]

A filament of the resin composition 14 was supplied to fused deposition modeling 3D printer FUNMAT PRO410 manufactured by INTAMSYS TECHNOLOGY CO., LTD. and extruded from a heated nozzle having a temperature of 300°C. It was confirmed that the filament could be discharged without clogging the nozzle and the molten filament was immediately solidified.

From Table 6 and Examples 12 and 13, it is understood that the resin compositions obtained in the present invention have the heat resistance and the water solubility and can be molded by heat fusion.

## Claims

**1.** A water-dispersible resin composition comprising:

a resin α that includes, in a main chain thereof, a structure M having two aromatic rings linked by a sulfide group, a sulfonyl group, an imide group, or a keto group; and
a resin β having a hydrophilic group,
the resins α and β being configured to form a co-continuous structure including three-dimensional continuous phases of the resins α and β.

**2.** The water-dispersible resin composition according to claim 1, wherein the resin β has a glass transition temperature of 30°C or more and 280°C or less.

3. The water-dispersible resin composition according to claim 1 or 2, further comprising a water-insoluble resin γ having an epoxy group, a carbodiimide group, or an acid anhydride group.

4. The water-dispersible resin composition according to any one of claims 1 to 3, comprising an organic salt compound δ represented by a General Formula (5) below:

$$(R\text{-}SO_3^-)_nQ^{n+} \quad (5)$$

wherein R represents a hydrocarbon group that may have a substituent and has 1 to 30 carbon atoms, $Q^{n+}$ represents a cation, and n represents a number of 1 or 2.

5. The water-dispersible resin composition according to any one of claims 1 to 4, having a glass transition temperature of 150°C or more.

6. The water-dispersible resin composition according to any one of claims 1 to 5, wherein a molar ratio of a content of the hydrophilic group in the resin β to a content of the structure M in the resin α (a content of the structure M/a content of the hydrophilic group) contained in the water-dispersible resin composition is 40/60 or more and 99/1 or less.

7. The water-dispersible resin composition according to any one of claims 1 to 6, wherein a mass ratio of a content of the resin β to a content of the resin α (a content of the resin β/a content of the resin α) contained in the water-dispersible resin composition is 25/75 or more and 90/10 or less.

8. The water-dispersible resin composition according to any one of claims 1 to 7, wherein the content of the resin α in the water-dispersible resin composition is 10 mass% or more and 80 mass% or less.

9. The water-dispersible resin composition according to any one of claims 1 to 8, wherein the content of the structure M in the resin α is 1 mmol/g or more and 10 mmol/g or less.

10. The water-dispersible resin composition according to any one of claims 1 to 9, wherein the resin α has a glass transition temperature of 150°C or more and 280°C or less.

11. The water-dispersible resin composition according to any one of claims 1 to 10, wherein the content of the hydrophilic group in the resin β is 0.5 mmol/g or more and 3 mmol/g or less.

12. The water-dispersible resin composition according to any one of claims 1 to 11, wherein the resin β having the hydrophilic group is a resin that includes: an aromatic dicarboxylic acid monomer unit A having a hydrophilic group; and a dicarboxylic acid monomer unit B having no hydrophilic group.

13. The water-dispersible resin composition according to claim 12, wherein a molar ratio of the aromatic dicarboxylic acid monomer unit A to the dicarboxylic acid monomer unit B (the aromatic dicarboxylic acid monomer unit A/the dicarboxylic acid monomer unit B) in the resin β is 10/90 or more and 60/40 or less.

14. The water-dispersible resin composition according to claim 12 or 13, wherein an aromatic dicarboxylic acid A for deriving the aromatic dicarboxylic acid monomer unit A is at least one selected from the group consisting of anionic group-containing aromatic dicarboxylic acids, cationic group-containing aromatic dicarboxylic acids, and nonionic group-containing aromatic dicarboxylic acids.

15. The water-dispersible resin composition according to claim 14, wherein the aromatic dicarboxylic acid A is at least one selected from the group consisting of sulfophthalic acids and sulfonaphthalenedicarboxylic acids.

16. The water-dispersible resin composition according to any one of claims 12 to 15, wherein a dicarboxylic acid B for deriving the dicarboxylic acid monomer unit B is at least one selected from the group consisting of aromatic dicarboxylic acids not having the hydrophilic group and aliphatic dicarboxylic acids not having the hydrophilic group.

17. The water-dispersible resin composition according to claim 16, wherein the dicarboxylic acid B is at least one selected from the group consisting of phthalic acids, furandicarboxylic acids, naphthalenedicarboxylic acids, cyclohexanedicarboxylic acids, and adamantanedicarboxylic acids.

**18.** The water-dispersible resin composition according to any one of claims 1 to 17, wherein the resin β includes a monomer unit derived from a monomer having two functional groups reactive with a carboxy group.

**19.** The water-dispersible resin composition according to claim 18, wherein the monomer unit derived from a monomer having two functional groups reactive with a carboxy group is at least one selected from the group consisting of an aliphatic diol monomer unit, an aromatic diol monomer unit, an aliphatic diamine monomer unit, and an aliphatic diamine monomer unit.

**20.** The water-dispersible resin composition according to any one of claims 1 to 19, wherein

the structure M is represented by a General Formula (1) or (2) below:

[Formula 1]

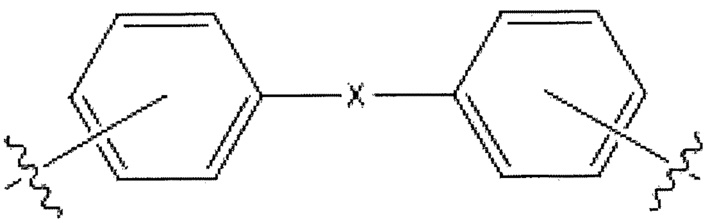

(1)

wherein X represents $SO_2$, S, or CO.

[Formula 2]

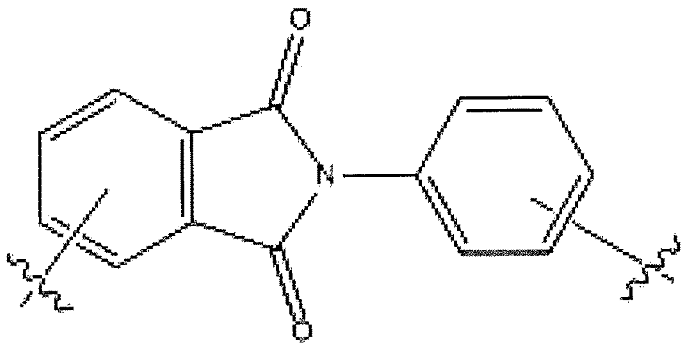

(2)

**21.** The water-dispersible resin composition according to any one of claims 1 to 20, wherein the resin α includes, in the main chain thereof, at least one structure L that is different from the structure M and has two linked aromatic rings.

**22.** The water-dispersible resin composition according to claim 21, wherein the structure L is a structure having two aromatic rings linked by a single bond, an ether group, or an alkyl methylene group.

**23.** The water-dispersible resin composition according to any one of claims 1 to 22, wherein the resin α is at least one selected from the group consisting of polyphenylsulfone, polysulfone, polyetherimide, polyether ether ketone, polyphenylenesulfide, polyethersulfone, and polyamide-imide.

**24.** The water-dispersible resin composition according to any one of claims 1 to 23, wherein the hydrophilic group is a sulfonate group.

**25.** A soluble material for three-dimensional modeling, the soluble material comprising the resin composition according to any one of claims 1 to 24.

**26.** A support material configured to support a three-dimensional object when the three-dimensional object is produced

by a fused deposition modeling 3D printer, the support material comprising the resin composition according to any one of claims 1 to 25.

**27.** Use of the soluble material for three-dimensional modeling according to claim 26 as a support material when a three-dimensional object is produced by a fused deposition modeling 3D printer.

Fig.1

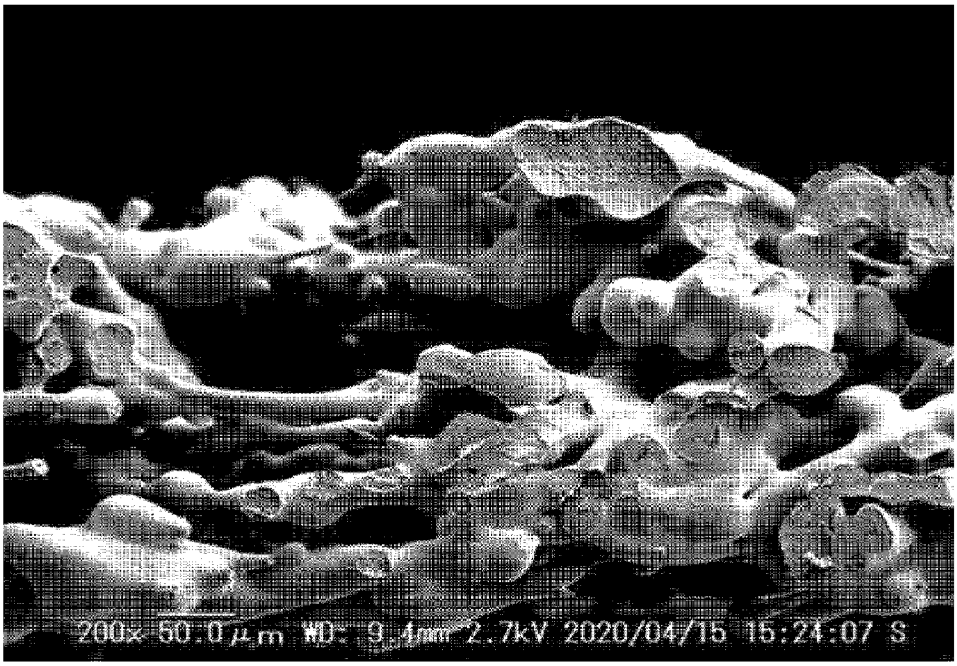

## INTERNATIONAL SEARCH REPORT

International application No.
PCT/JP2021/020942

A. CLASSIFICATION OF SUBJECT MATTER
C08K 5/42(2006.01)i; C08L 67/02(2006.01)i; C08L73/00(2006.01)i; C08L77/06(2006.01)i; C08L 81/00(2006.01)i; C08L 101/02(2006.01)i; C08L 101/06(2006.01)i; C08L79/08(2006.01)i
FI: C08L101/06; C08K5/42; C08L101/02; C08L73/00; C08L79/08; C08L81/00; C08L67/02; C08L77/06
According to International Patent Classification (IPC) or to both national classification and IPC

B. FIELDS SEARCHED
Minimum documentation searched (classification system followed by classification symbols)
C08K5/42; C08L67/02; C08L73/00; C08L77/06; C08L81/00; C08L101/02; C08L101/06; C08L79/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2003-268235 A (SHIMIZU KK) 25 September 2003 (2003-09-25) claims, paragraph [0009], examples | 1-2, 5-9, 11, 20-21<br>3-4, 10, 12-19, 22-27 |
| X<br>A | JP 2000-178481 A (DAINIPPON PRINTING CO., LTD.) 27 June 2000 (2000-06-27) claims, examples | 1-3, 5-9, 11, 20-21<br>4, 10, 12-19, 22-27 |
| X<br>A | JP 2002-161248 A (DAINIPPON PRINTING CO., LTD.) 04 June 2002 (2002-06-04) claims, examples | 1-3, 5-9, 11, 20-21<br>4, 10, 12-19, 22-27 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 July 2021 (19.07.2021) | 27 July 2021 (27.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/020942

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2017-214450 A (DIC CORPORATION) 07 December 2017 (2017-12-07) claims, examples | 1-2, 5-11, 20-23<br>3-4, 12-19, 24-27 |
| X<br>A | JP 2008-534274 A (GAMBRO LUNDIA AB) 28 August 2008 (2008-08-28) claims, examples | 1-2, 5-11, 20-23<br>3-4, 12-19, 24-27 |
| A | JP 2017-61670 A (PALL CORPORATION) 30 March 2017 (2017-03-30) entire text | 1-27 |
| A | WO 2018/139537 A1 (KAO CORP.) 02 August 2018 (2018-08-02) entire text | 1-27 |

Form PCT/ISA/210 (continuation of second sheet) (January 2015)

**INTERNATIONAL SEARCH REPORT**
Information on patent family members

International application No.
PCT/JP2021/020942

| Patent Documents referred in the Report | Publication Date | Patent Family | Publication Date |
|---|---|---|---|
| JP 2003-268235 A | 25 Sep. 2003 | (Family: none) | |
| JP 2000-178481 A | 27 Jun. 2000 | (Family: none) | |
| JP 2002-161248 A | 04 Jun. 2002 | (Family: none) | |
| JP 2017-214450 A | 07 Dec. 2017 | (Family: none) | |
| JP 2008-534274 A | 28 Aug. 2008 | US 2009/0057225 A1<br>claims, examples<br>WO 2006/106133 A1<br>EP 1710011 A1<br>KR 10-2007-0116877 A<br>CN 101137429 A | |
| JP 2017-61670 A | 30 Mar. 2017 | US 2016/0375412 A1<br>entire text<br>EP 3108956 A1<br>AU 2016202722 A<br>KR 10-2017-0001566 A<br>CN 106422817 A<br>TW 201706342 A<br>SG 10201603254S A | |
| WO 2018/139537 A1 | 02 Aug. 2018 | US 2020/0055232 A1<br>entire text<br>EP 3575065 A1<br>CN 108698330 A<br>AU 2018213599 A<br>CA 3052023 A<br>KR 10-2019-0111070 A<br>BR 112019015702 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018024243 A
- JP 2017114930 A